**Europäisches Patentamt**

**European Patent Office**

**Office européen des brevets**

(19)

(11) Veröffentlichungsnummer : **0 129 124 B2**

(12) ## NEUE EUROPÄISCHE PATENTSCHRIFT

(45) Veröffentlichungstag der neuen Patentschrift :
**08.04.92 Patentblatt 92/15**

(51) Int. Cl.⁵ : **C09D 133/14,** C08L 33/06,
C08G 18/62

(21) Anmeldenummer : **84106259.9**

(22) Anmeldetag : **01.06.84**

(54) **Verfahren zur Herstellung von Überzügen und mit einem Mehrschichtüberzug beschichteter Gegenstand.**

(30) Priorität : **18.06.83 DE 3322037**

(43) Veröffentlichungstag der Anmeldung :
**27.12.84 Patentblatt 84/52**

(45) Bekanntmachung des Hinweises auf die
Patenterteilung :
**14.09.88 Patentblatt 88/37**

(45) Bekanntmachung des Hinweises auf die
Entscheidung über den Einspruch :
**08.04.92 Patentblatt 92/15**

(84) Benannte Vertragsstaaten :
**AT BE CH DE FR GB IT LI NL SE**

(56) Entgegenhaltungen :
**EP-A- 0 029 598**

(56) Entgegenhaltungen :
**GB-A- 2 074 588**
**US-A- 3 773 710**
**US-A- 3 975 457**
**US-A- 3 998 768**

(73) Patentinhaber : **BASF Lacke + Farben
Aktiengesellschaft
Max-Winkelmann-Strasse 80
W-4400 Münster (DE)**

(72) Erfinder : **Poth, Ulrich
Albachtener Strasse 53
W-4400 Münster (DE)**
Erfinder : **Bartol, Fritz
Weidenstrasse 48
W-4700 Hamm 1 (DE)**
Erfinder : **Machholz, Adolf
Sankt Rochus Strasse 2
W-8700 Würzburg (DE)**

EP 0 129 124 B2

**Beschreibung**

Die Erfindung betrifft ein Verfahren zur Herstellung von Überzügen, bei dem mindestens eine Pigmente enthaltende Basisschicht nach einer Ablüftzeit nach dem Naß-in-Naß-Verfahren hierauf eine eine transparente Deckschicht bildende, Lösungsmittel und gegebenenfalls Verfaufsmittel, UV-Absorber und Radikakfänger enthaltende Überzugsmasse aufgebracht wird und die Schichten bei Raumtemperatur aushärten oder durch gemeinsames Erhitzen gehärtet werden, wobei die Überzugsmasse für die Deckschicht als Bindemittel hydroxylgruppenhaltige Acrylpolymerisate und aliphatisches und/oder cycloaliphatisches Polyisocyanant enthält.

Sogenannte Zweischicht-Melallic-Lackierungen werden häufig nach dem Nass-in-Nass-Verfahren hergeslelll. Hierbei wird in einem ersten Schritt eine Metallpigmente und gegebenenfalls zusälzlich färbende Pigmente enthallende Basisschicht durch Aufbringen eines Basislacks hergestellt. Nach einer Ablüftzeit wird auf den noch nicht ausgehärteten Basislack eine transparente Überzugsmasse, d.h. in der Regel ein Klarlack, als Deckschicht aufgebracht, und anschliessend werden beide Schichten gemeinsam eingebrannt, d. h. gehärtet. Daneben sind auch lufttrocknende Systeme bekannt, die bei Raumtemperatur aushärten.

Zur Herstellung der Deckschicht werden häufig Klarlacke eingesetzt, die als Bindemittel hydroxylgruppenhaltige Acrylalharze in Kombination mit Aminoharzen enthalten. Im applikationsfähigen Zustand, d.h. bei einer Auslaufzeit von 24 bis 30 Sekunden im DIN-Becher 4, haben diese Klarlacke normalerweise einen Festkörpergehalt von 35 bis 45 Gew.-% und damit einen Lösungsmittelanteil von 55 bis 65 Gew.-%.

Aus Gründen des Umweltschutzes und der Wirtschaftlichkeil sind festkörperreiche Klarlacke entwickelt worden, die im applikationsfähigen Zustand einen Festkörpergehalt von 45 bis 55 Gew.% aufweisen. Der höhere Festkörpergehalt wird durch Senkung des Molekulargewichts der Bindemittel und durch Verwendung weicher und damit besser löslicher Bindemittelkomponenten erreicht. Die bisher verwendeten festkörperreichen Klarlacke bringen nachteilig eine negative Beeinflussung der Anordnung der Metallpigmente der Basisschichten und damit einen unbefriedigenden Metallic-Effekt mit sich, und die mit ihnen hergestellten Überzüge weisen insbesondere bei Anwendung niedriger Einbrenntemperaturen eine unbefriedigende Chemikalienbeständigkeit auf.

Es werden auch Zweikomponenten-Klarlacke verwendet, die als Bindemittel hydroxylgruppenhaltige Acrylatharze enthalten und durch Polyisocyanate versetzt werden. Diese Lacke weisen üblicherweise im applikationsfähigen Zustand einen Festkörpergehall von 32 bis 45 Gew.-% auf. Ihre Vorteile liegen in einer niedrigen Härtungstemperatur von 20 bis 120°C und einer höheren Chemikalienbeständigkeit. Wenn man bei diesen Lacken versucht, durch Anteile von Acrylatharzen mit niedrigem Molekulargewicht den Festkörpergehall zu erhöhen, tritt das Problem des Wiederanlösens auf.

Es is Aufgabe der Erfindung ein Verfahren zur Herstellung von Überzügen zu entwickeln, bei dem der Klarlack einen hohen Festkörpergehalt im verarbeitungsfahigen Zustand aufweist, Überzüge mit hoher Wetter- und Chemikalienbeständigkeit liefert und gleichzeitig zu einem guten Metallic-Effekt führt, wenn er bei einer Zwei- oder Mehrschicht-Metellic-Lackierung nach dem Nass-in-Nass-Verfahren eingesetzt wird.

Überraschenderweise wurd nun gefunden, dass diese Aufgabe durch eine Verfahren zur Herstellung von Überzügen gelöst wird, bei dem die Überzugsmasse als Bindemittel eine Kombination zweier spezieller hydroxylgruppenhaltiger Acrylatharze und ein aliphatisches und/oder cycloaliphatisches Polyisocyanat oder ein Gemisch derarliger Polyisocyanate enthält.

Gegenstand der Erfindung ist also eine Verfahren der eingangsgenannten Art, das dadurch gekennzeichnet ist, dass das Bindemittel der Überzugsmasse aus den folgenden Bestandteilen besteht:

A) 50 bis 90 Gew.-%, bezogen auf die Summe der Acrylpolymerisate eines ersten Acrylpolymerisals, mit
  – einem Molekulargewicht von 800 bis 4000,
  – einer Hydroxylzahl von 80 bis 180 und
  – einer Glasübergangstemperatur unterhalb -10°C, das hergestellt worden ist, aus
      $a_1$) 75 bis 100 Gew.-% Acrylsäureestern,
      $a_2$) 0 bis 25 Gew.-% Methacrylsäureestern, wobei ein solcher Anteil der Komponenten a, und $a_2$ Hydroxyalkylacrylale bzw. Hydroxyalkylmethacrylale sind, dass die Hydroxylzahl von 80 bis 180 erreicht wird,
      $a_3$) 0 bis 15 Gew.-% Comonomeren mit aromatischen Gruppen und
      $a_4$) 0 bis 2 Gew.-% $\alpha,\beta$-elhylenisch ungesättigten Säuren, wobei die Summe der Komponenten $a_1$ bis $a_4$ 100% beträgt,

B) 10 bis 50 Gew.-%, bezogen auf die Summe der Acrylpolymerisate, eines zweiten Acrylpolymerisats mit
  – einem Molekulargewicht von 3000 bis 10 000,
  – einer Hydroxylzahl von 40 bis 120 und
  – einer Glasübergangstemperatur von -10 °C bis +70 °C, das hergestellt worden ist, aus
      $b_1$) 0 bis 30 Gew.-% Acrylsäureestern,

2

$b_2$) 70 bis 98 Gew.-% Methacrylsäureestern, wobei ein solcher Anteil der Komponenten $b_1$ und $b_2$ Hydroxyalkylacrylate bzw. Hydroxyalkylmethacrylate sind, dass die Hydroxylzahl von 40 bis 120 erreicht wird,

$b_3$) 0 bis 30 Gew.-% Comonomeren mit aromatischen Gruppen und

$b_4$) 0 bis 3 Gew.-% $\alpha,\beta$-ethylenisch ungesättigten Säuren, wobei die Summe der Komponenten $b_1$ und $b_4$ 100% beträgt, und

C) ein aliphatisches oder cycloaliphatisches Polyisocyanat oder ein Gemisch derartiger Polyisocyanate in einer solchen Menge, dass auf eine Hydroxylgruppe der Bestandteile A) und B) 0,8 bis 1,3 Isocyanatgruppen entfallen.

Das Polymerisat A wird durch radikalische Lösungspolymerisation der Monomeren $a_1$ bis $a_4$ hergeslellt. Als Komponente $a_1$ können Melhyl-, Ethyl-, n-Propyl-, i-Propyl-, n-Butyl-, i-Bulyl-, sec-Butyl-, t-Bulyl-, n-Pentyl-, Neopentyl-, n-Hexyl-, Cyclohexyl-, n-Oclyl-, 2-Ethythexyl-, N-Dodecyl(Lauryl), 2-Hydroxyelhyl-, 4-Hydroxibutylacrylat und Hydroxypropylacrylat eingesetzt werden. Als Komponente $a_2$ sind die entsprechenden Ester der Methacrylsäure geeignet. Die Auswahl der Komponenten $a_1$ und $a_2$ muss so getroffen werden, dass das Polymerisal A eine Hydroxylzahl von 80 bis 180 und eine Glasübergangstemperatur von unterhalb -10 °C aufweist. Die Glasübergangstemperatur des Polymerisats kann aus den Glasübergangstemperaturen der Monomerkomponenten nach der folgenden Formel berechnet werden

$$\frac{1}{T_g} = \sum \frac{m_i}{T_{gi}} ,$$

in der $T_g$ die Glasübergangstemperatur des polymerisals, $T_{gi}$ die Glasübergangstemperaturen und $m_i$ die Massenanteile der Monomerkomponenten bedeuten.

Es können bis zu 15 Gew.-%, bezogen auf die Summe aller Comonomeren, Monomere mit aromalischen Gruppen eingesetzt werden. Hier sind z. B. Styrol, -Methylstyrol oder Vinyltoluol geeignet (Komponente $a_3$).

Als Komponente $a_4$ können Acrylsäure und/oder Methacrylsäure bis zu einem Anteil von 2 Gew.-% mitverwendel werden. Die Polymerisalion wird so durchgeführt dass das entstehende Polymerisat A ein Molekulargewicht, gemessen durch Gelpermeationschromatographie, von 800 bis 4000 aufweist. Die Einstellung dieses Molekulargewichts kann durch geeignete Steuerung der Verfahrensparameter wie Temperatur, Menge und Art des Initialors, Konzentration und Zeit erreicht werden.

Als Komponenten $b_1$ bis $b_4$ für die Herstellung des Polymerisats B sind grundsätzlich die gleichen Monomeren geeignet, die als Komponenten $a_1$ bis $a_4$ zur Herstellung des Polymerisals A eingesetzt werden. Sie sind allerdings so auszuwählen, dass ein Copolymerisal mit einer Hydroxylzahl von 40 bis 120 und einer Glasübergangstemperatur von -10 °C bis +70 °C entsteht, und die Polymerisation ist so durchzuführen, dass das Produkt ein Molekulargewicht von 3000 bis 10 000 aufweist. Während bei dem Polymerisat A der Anteil an Acrylsäureestern überwiegt, enthält das Polymerisat B überwiegend Methacrylsäureester.

Als Bestandteil C werden aliphatische oder cycloaliphatische Polyisocyanate eingesetzt, wobei Verbindungen mit 2 Isocyanatgruppen pro Molekül bevorzugt werden, Beispiele hierfür sind Hexamethylendiisocyanat, Trimethylhexamethylendiisocyanat, 1-Methyl-2,4-diisocyanatocyclohexan, 3-Isocyanatomethyl-3,5,5-trimethylcyclohexyldiisocyanal und 4,4-Dicyclohexylmethandiisocyanat sowie durch Isocyanurat- oder Biuretbildung erhaltene Oligomere oder Urethanoligomere.

Die Überzugsmasse enthält neben den genannten Bindemittelbestandteilen organische Lösungsmittel, z.B. Xylol, Toluol, andere Alkylbenzole, Elhylacetat, Butylacetat, Ethylglykolacetat und/oder Ketone. Weiterhin kann die Überzugsmasse Verlaufhilfsmittel, z.B. Silikonöle und UV-Absorber und Radikalfänger, z.B. sterisch gehinderte tertiäre Amine, Benzophenolderivate und Oxanilide, enthalten.

Für die Basisschicht können die nach dem Stand der Technik bekannten Überzugsmassen verwendel werden, wie sie zum Beispiel in der US-PS 3 639 147 beschrieben sind.

Im folgenden wird die Erfindung anhand von Beispielen näher erläutert.

Beispiel I, Basislacke

1. Polyester für Einbrenn-Basislack

In ein Reaktionsgefäss mit Rührer, Thermometer, Inertgaszuleitung, Füllkörperkolonne, Thermometer für die Kontrolle der Kolonnenkopftemperatur, absteigendem Kühler und Destillatvorlage werden eingewogen 2,2-Dimethylpropandiol-1,3, Hexandiol-1,6,1,1,1-Trimethylolpropan, Benzol-1,3-dicarbonsäure und Adipinsäure im molaren Verhältnis von 3:1:1:3:1 zusätzlich 3% Xylol und 92% (bezogen auf die Gesamtmenge des Reaktionsgemisches) Zinkoctoat und unter Rühren und schwachem Inertgasstrom auf 180°C erhitzt. Das Reaktionsgemisch wird bei langsam von 180°C auf maximal 220°C durch Abdestillation des Reaktionswassers umgesetzt, wobei die Kolonnenkopftemperatur 103°C nicht überschreiten darf, bis zu einer Säurezahl von 14,5. Dann wird abgekühlt und das resultierende Polyesterharz so in einem Gemisch aus Xylol und Ethylenglykolmonoethylesteracetat, im Verhältnis 3:1 angelöst, dass eine Polyesterlösung von 60% Feststoffgehall entsteht.

### 2. Acrylat für Einbrenn-Basislack

In ein Reaktionsgefäss mit Rührer, Thermometer, Rückflusskühler und Zulaufgefäss wird ein Gemisch aus 400 g Xylol, 500 g Butylacetat und 100 g n-Butanol eingewogen und unter Rühren bis zum Sieden erhitzt. In das Zulaufgefäss wird ein Gemisch aus 500 g Methacrylsäuremethylester, 330 g Methacrylsäure-n-butylester, 150 g 2-Hydroxypropylmethacrylat, 20 g Methacrylsäure und 25 g t-Butylperbenzoat eingefüllt und innerhalb 3 Stunden gleichmässig in das Reaktionsgefäss zudosiert, wobei die Temperatur so geführt wird, dass stets leichter Rückfluss besteht. Dann wird diese Temperatur weitere 3 Stunden gehalten bis durch vollständige Umsetzung eine 50%ige Polymerisatharzlösung entstanden ist.

### 3. Acrylatharz für lufttrocknenden Basislack

In ein Reaktionsgefäss mit Rührer, Thermometer, Rückflusskühler wird ein Gemisch aus 450 g n-Butylacetat, 600 g Methacrylsäuremethylester, 375 g Methacrylsäure-n-butylester, 25 g Acrylsäure und 5 g Azoisobuttersäuredinitril eingewogen und auf 80°C erhitzt. Es wird vorsichtig weiter erhitzt, bei Auftreten der exothermen Reaktion wird gekühlt, Es wird dann 30 Minuten bei 90°C gehalten und dann weitere 300 g Butylacetat und 5 g Azoisobuttersäuredinitril zugegeben und wieder auf 90°C erhitzt. Dieser Vorgang wird noch zweimal wiederholl. Nach der letzten Zugabe wird 90 Minuten bei 90°C gehallen und bei Abschluss der Polymerisationsreaktion wird die erhaltene Polymerisalharzlösung abgekühlt und mit 150 g Bulylacelat auf einen Festgehalt von 40% verdünnt.

### 4. Basislack aus 1.

Die aus 1. hergestellte Polyesterlösung wird mit einer Lösung eines Buttersäure/Essigsäureesters von Cellulose mit einem Gehalt von 37% Butyrat und 13% Acetat, 20% gelöst in Xylol/n-Butylacetat 1:1, einem partiell mit n-Butanol verethertem Kondensationsprodukt aus Melamin und Formaldehyd 55%ig in Bulanol und einer feinteiligen 65%ig in aliphatischen Kohlenwasserstoffen benetzten Aluminiumbronze so gemischt, dass die genannten Bestandteile in den Verhältnissen 35:25:25:15, bezogen auf die Feststoffanteile, vorliegen und der Gesamtfeststoffgehalt von 22% resulliert, Zur Komplettierung werden 8% Glykolsäure-n-butylesler, 2% Diethylenglykol -butyl- ether und soviel eines Gemisches aus Xylol und n-Butylacetat zugegeben, dass 100 Gew.-Teile erreicht werden.

### 5. Basislack aus 2.

Die Acrylalharzlösung nach 2. wird mit dem unter 4. genannten Celluloseacetobutyrat und einem hochviskosem mit n-Butanol verethertem Harnstoff-Formaldehyd-Kondensationsharz und Al-Bronze zu einem Verhältnis von 38:30:20:12, bezogen auf den Feststoffanteil, zu einem Gesamtfestgehall von 20% gemischt. Weiterhin wird verfahren wie bei 4.

### 6. Basislack aus 3.

25 Gew.-% der nach 3. hergestellten Acrylatharzlösung wird 45,0% eines 20%ig in Butylacetat und Xylol (70:30) gelösten, mittelviskosen Celluloseacetöbutyral, 3,2% einer 65%igen mittelfeinen AL-Bronze, 5,0% Ethylenglykolmonoethyletheracetat, 2,5% 2-Ethylhexanol, 1,0% einer 1%igen Lösung eines Phenylmelhylpolysiloxans und 18,3% Butylacetat gemischt, so dass ein homogener Basislack mit einem Festgehall von 21,4% entsteht.

### Beispiel II, 1-4

(Zusammensetzung siehe Tabelle 1)
In ein Reaktionsgefäss mit Rührer, Thermometer, Rückflusskühler und zwei Zulaufgefässen wird das in der Tabelle angegebene Lösungsmittel(-gemisch) eingewogen und auf die angegebene Polymerisationstemperatur aufgeheizt, Dann wird aus dem ersten Zulaufgefäss das angegebene Monomerengemisch innerhalb 4 Stunden und aus dem zweiten Zulaufgefäss die angegebene Initiatorlösung innerhalb 4,5 Stunden gleichmässig in das Reaktionsgefäss dosiert, Durch Heizen und Kühlen wird die angegebene Temperatur gehalten, nach dem letzten Zulauf noch 1,5 Stunden, Es resultieren Polymerisatharzlösungen mit den in der Tabelle angegebenen Kenngrössen.

Tabelle 1: Acrylatharze A

|  |  | II, 1 | II, 2 | II, 3 | II, 4 |
|---|---|---|---|---|---|
| Lösungsmittel: |  |  |  |  |  |
| Lösungsbenzol[1] |  | 600 | 600 | 520 | 520 |
| Ethylenglykolethyletheracetat |  | – | – | 80 | 80 |
| Monomere: |  |  |  |  |  |
| Ethylhexylacrylat |  | – | 250 | – | 208 |
| n-Butylacrylat |  | 300 | – | 285 | – |
| t-Butylacrylat |  | – | 363 | 350 | 260 |
| Ethylacrylat |  | 320 | – | – | – |
| 2-Hydroxypropylacrylat |  | 320 | 295 | 350 | 355 |
| 2-Hydroxyethylacrylat |  | – | – | – | – |
| Acrylsäure |  | 10 | 12 | 15 | 127 |
| n-Butylmethacrylat |  | – | – | – | 150 |
| Styrol |  | 50 | 80 | – | – |
| Initiatorlösung: |  |  |  |  |  |
| Lösungsbenzol[1] |  | 65 | 65 | 65 | 65 |
| Di-tert.Butylperoxid |  | 48 | 56 | 40 | 60 |
| Polymerisationstemperatur: | °C | 150 | 150 | 145 | 145 |
| Kenngrössen: |  |  |  |  |  |
| Festkörpergehalt | % | 60 | 60 | 60 | 60 |
| $\eta$ (DIN 53015)[2] | mPas | 220 | 295 | 280 | 215 |
| OH-Zahl |  | 142 | 127 | 150 | 153 |
| Säurezahl |  | 12,0 | 15,5 | 17,8 | 26,0 |
| Tg |  | – 24,9 | – 11,5 | – 10,4 | – 14,1 |

[1] Lösungsbenzol = Aromatenfraktion mit Alkylbenzolen ab 156–172°C   [2] $\eta$ = Viskosität

Beispiel III Acrylatharze

Beispiel III, 1–4
   Es wird verfahren wie bei den Beispielen II, 1–4, eingesetzt werden die Rohstoffe und Mengen von Tabelle 2.
   Die Zusammensetzungen in den Tabellen sind in Gewichtsteilen angegeben.

Tabelle 2: Acrylatharze B

|  |  | III, 1 | III, 2 | III, 3 | III, 4 |
|---|---|---|---|---|---|
| Lösungsmittel |  |  |  |  |  |
| Lösungsbenzol |  | – | 450 | 450 | 450 |
| Xylol |  | 250 | – | – | – |
| Ethylglykolacetat |  | 150 | – | – | – |
| Butylacetat |  | 200 | 150 | 150 | 150 |
| Monomere |  |  |  |  |  |
| Ethylhexylmethacrylat |  | 150 | – | 100 | – |
| n-Butylmethacrylat |  | – | 180 | 290 | 300 |
| Methylmethacrylat |  | 345 | 450 | 380 | 250 |
| Hydroxyethylmethacrylat |  | 100 | 210 | – | – |
| Hydroxypropylmethacrylat |  | 150 | – | 210 | 270 |
| Methacrylsäure |  | 5 | 10 | 20 | 30 |
| n-Butylacrylat |  | 100 | – | – | 150 |
| Ethylhexylacrylat |  | – | 150 | – | – |
| Styrol |  | 150 | – | – | – |
| Initiatorlösung: |  |  |  |  |  |
| Di-tert.-Butylperoxid |  | 45 | 30 | 40 | 50 |
| Xylol |  | 65 | 65 | 65 | 65 |
| Polymerisationstemperatur: | °C | 125 | 130 | 130 | 130 |
| Kenngrössen |  |  |  |  |  |
| Festkörpergehalt | % | 60 | 60 | 60 | 60 |
| $\eta$ (50% mit EGA)* | mPa.s | 650 | 550 | 750 | 450 |
| OH-Zahl |  | 102 | 91 | 82 | 86 |
| SZ |  | 4,0 | 8,5 | 16,5 | 24,5 |
| Tg |  | 50,4 | 36,3 | 55,6 | 40,0 |

* EGA = Ethylglykolacetat

Tabelle 3: Acrylatharzmischungen A + B (Mischung IV)

| IV: | 1 | 2 | 3 | 4 | 5 |
|---|---|---|---|---|---|
| Acrylatharzlösung II, 1 | 60,0 | 48,0 | – | – | – |
| Acrylatharzlösung II, 2 | – | – | 60,0 | – | – |
| Acrylatharzlösung II, 3 | – | – | –: | 73,0 | – |
| Acrylatharzlösung II, 4 | – | – | – | – | 65,0 |
| Acrylatharzlösung III, 1 | 23,0 | – | 23,0 | – | – |
| Acrylatharzlösung III, 2 | – | 35,0 | – | – | – |
| Acrylatharzlösung III, 3 | – | – | – | 10,0 | – |
| Acrylatharzlösung III, 4 | – | – | – | – | 18,0 |
| Ethylenglykolmonoethyletheracetat | 8,0 | 8,0 | 8,0 | 8,0 | 8,0 |
| Ethylenglykolmonobutyletheracetat | 2,0 | 2,0 | 2,0 | 2,0 | 2,0 |
| Derivat des Oxanilid | 0,5 | 0,5 | 0,5 | – | 0,5 |
| Phenylmethylpolysiloxan 5%ig in Xylol | 0,8 | 0,8 | 0,8 | 0,8 | 0,8 |
| Xylol | 5,7 | 5,7 | 5,7 | 5,7 | 5,7 |
| Festkörpergehalt % | 50 | 50 | 50 | 50 | 50 |

## Applikation

Basislacke werden mit Xylol/Butylacetat auf eine Viskosität von 17 sec im DIN-Becher 4 eingestellt und mit einer Fliessbecherpistole so appliziert, dass eine Schichtdicke von 18 µm im Trokkenfilm resultiert. Nach einer Ablüflzeit der aufgebrachten Basislackschicht von drei Minuten werden die Klarlacke IV, 1 bis IV, 5 appliziert durch Verspritzen mit einer Fliessbecherpistole; es werden Trockenschichtdicken für den Klarlack von 35 µm erreicht.

Bei Einsalz der Basislacke I, 4 und I, 5 werden Einbrennlemperaluren von 90 °C (45 min.) und 130 °C (30 min.) für das gesamte System angewendel. Für den Basislack 1, 6 und den Klarlack zusätzlich mit 2% einer 1%igen Lösung von Dibutylzindilaurat n-Butylacetat versetzt und 60 min. bei 60 °C getrocknet.

Die Zweischicht-Metallic-Systeme zeigen einen sehr guten Metalliceffekt, mit hoher Helligkeit in der Aufsicht, gute Beständigkeil gegen 10%ige Salzsäure und 10%ige Schwefelsäure und Xylol.

Lack IV, 4 zeigt eine Risszeit von 2100 Stunden im Xenon-Wealher-0-meler mit Quarzfiltern ab 280 nm und einem Trocken/Nass-Zyklus von 47/3. Die Lacke IV 1, 2, 3, 5 sind nach dieser Zeit noch rissfrei.

## Patentansprüche

1. Verfahren zur Herstellung von Überzügen, bei dem mindestens eine Pigmente enthaltende Basisschicht nach einer Ablüftzeit nach dem Nass-in-Nass-Verfahren hierauf eine eine transparente Deckschicht bildende, Lösungsmittel und gegebenenfalls Verlaufhilfsmittel, UV-Absorber und Radikalfänger enthaltende Überzugsmasse aufgebracht wird und die Schichten bei Raumtemperatur aushärten oder durch gemeinsames Erhitzen gehärtet werden, wobei die Überzugsmasse für die Deckschicht als Bindemittel hydroxylgruppenhaltige Acrylpolymerisate und aliphatisches und/oder cycloaliphatisches Polyisocyanat enthält, dadurch gekennzeichnet, dass das Bindemittel der Überzugsmasse aus den folgenden Bestandteilen besteht:

A) 50 bis 90 Gew.-%, bezogen auf die Summe der Acrylpolymerisate eines ersten Acrylpolymerisats, mit
– einem Molekulargewicht von 800 bis 4000,
– einer Hydroxylzahl von 80 bis 180 und
– einer Glasübergangstemperatur unterhalb -10°C, das hergestellt worden ist, aus
$a_1$) 75 bis 100 Gew.-% Acrylsäureestern,
$a_2$) 0 bis 25 Gew.-% Methycrylsäureestern, wobei ein solcher Anteil der Komponenten $a_1$ und $a_2$ Hydroxyalkylacrylate bzw. Hydroxyalkylmethacrylate sind, dass die Hydroxylzahl von 80 bis 180 erreicht wird,
$a_3$) 0 bis 15 Gew.-% Comonomeren mit aromatischen Gruppen und
$a_4$) 0 bis 2 Gew.-% $\alpha,\beta$-ethylenisch ungesättigten Säuren, wobei die Summe der Komponenten $a_1$ bis $a_4$ 100% beträgt,

B) 10 bis 50 Gew.-%, bezogen auf die Summe der Acrylpolymerisate eines zweiten Acrylpolymerisates mit
– einem Molekulargewicht von 3000 bis 10 000,

– einer Hydroxylzahl von 40 bis 120 und
– einer Glasübergangstemperatur von -10 °C bis +70°C, das hergestellt worden ist, aus

$b_1$) 0 bis 30 Gew.-% Acrylsäureestern,

$b_2$) 70 bis 98 Gew.-% Methacrylsäureestern, wobei ein solcher Anteil der Komponenten $b_1$ und $b_2$ Hydroxyalkylacrylate bzw. Hydroxyalkylmethacrylate sind, dass die Hydroxylzahl von 40 bis 120 erreicht wird,

$b_3$) 0 bis 30 Gew.-% Comonomeren mit aromatischen Gruppen und

$b_4$) 0 bis 3 Gew.-% $\alpha,\beta$-ethylenisch ungesättigten Säuren, wobei die Summe der Komponenten $b_1$ bis $b_4$ 100% beträgt, und

C) ein aliphatisches oder cycloaliphatisches Polyisocyanat oder ein Gemisch derartiger Polyisocyanate in einer solchen Menge, dass auf eine Hydroxylgruppe der Bestandteile A) und B) 0,8 bis 1,3 Isocyanatgruppen entfallen.

2. Mit einem Mehrschichtüberzug beschichteter Gegenstand, hergestellt durch das Verfahren nach Anspruch 1.

## Claims

1. process for producing coatings by applying at least one pigment-containing base coat on top of which is applied by the wet-on-wet method, after a period of airdrying, a coating composition which contains solvents and, as binders, hydroxylcontaining acrylic polymers and aliphatic and/or cycloaliphatic polyisocyanate, may also contain flow-control agents, UV absorbers and radical traps and forms a transparent topcoat, and the coats harden at room temperature or are hardened by conjoint heating, wherein the binder of the coating composition comprises the following components:

A) 50 to 90% by weight, based on total acrylic polymers, of a first acrylic polymer having
– a molecular weight of 800 to 4,000,
– a hydroxyl number of 80 to 180 and
– a glass transition temperature below -10°C and having been prepared from

$a_1$)75 to 100% by weight of acrylic acid esters,

$a_2$) 0 to 25% by weight of methacrylic acid esters, a sullicient proportion of components $a_1$ and $a_2$ being hydroxyalkyl acrylates or hydroxyalkyl melhacrylates that the hydroxyl number of 80 to 180 is reached,

$a_3$) 0 to 15% by weight of comonomers having aromatic groups and

$a_4$) 0 to 2% by weight of $\alpha,\beta$-ethylenically unsalurated acids, the proportions of components $a_1$ to $a_4$ adding up to 100%.

B) 10 to 50% by weight, based on total acrylic polymers, of a second acrylic polymer having
– a molecular weight of 3,000 to 10,000,
– a hydroxyl number of 40 to 120 and
– a glass transition temperature of -10°C to +70°C and having been prepared from

$b_1$) 0 to 30% by weight of acrylic acid esters,

$b_2$) 70 to 98% by weight of methacrylic acid esters, a sufficient proportion of components $b_1$ and $b_2$ being hydroxyalkyl acrylates or hydroxyalkyl methacrylates that the hydroxyl number of 40 to 120 is reached,

$b_3$) 0 to 30% by weight of comonomers having aromatic groups and

$b_4$) 0 to 3% by weight of $\alpha.\beta$-ethylenically unsaturaled acids, the proportions of components $b_1$ to $b_4$ adding up to 100%, and

C) an aliphatic or cycloaliphatic polyisocyanate or a mixture of such polyisocyanates in such an amount that there are 0.8 to 1.3 isocyanate groups per hydroxyl group of components A) and B).

2. An article coated with a multilayer coating, prepared by the process claimed in claim 1.

## Revendications

1. Procédé de fabrication de revêtements, suivant lequel on applique sur au moins une couche de base renfermant des pigments, après un temps de ventilation, selon le procédé humide-sur-humide, une masse de revêtement renfermant des solvants et, le cas échéant, des auxiliaires d'écoulement, des absorbeurs de rayons ultraviolels et des absorbeurs de radicaux, et formant une couche de recouvrement transparente, et on laisse durcir les couches à la température ambiante ou on les fait durcir par chauffage commun, la masse de revêtement destinée à former la couche de recouvrement renfermant, comme liant, des polymères acryliques portant des groupes hydroxyle et un polyisocyanate aliphatique et/ou cycloaliphatique, caractérisé par le fait que le liant de la masse de revêtement comprend les constituants suivants:

A) 50 à 90% en poids, par rapport à la somme des polyméres acryliques, d'un premier polymère acrylique présentant:
- une masse moléculaire allant de 800 à 4000;
- un indice d'hydroxyle allant de 80 à 180; et
- une température de transition vitreuse se situant au-dessous de -10 °C, qui a été fabriqué à partir de
$a_1$) 75 à 100% en poids d'esters acryliques;
$a_2$) 0 à 25% en poids d'esters méthacryliques, les composants $a_1$ et $a_2$ incluant respectivement des acrylates d'hydroxyalkyle et des mélhacrylates d'hydroxyalkyle dans une fraction telle que l'indice d'hydroxyle allant de 80 à 180 soit atteint,
$a_3$) 0 à 15% en poids de comonoméres portant des groupes aromatiques; et
$a_4$) 0 à 2% en poids d'acides à insaturation $\alpha,\beta$-éthylénique, la somme des composants $a_1$ à $a_4$ s'élevant à 100%,

B) 10 à 50% en poids, par rapport à la somme des polyméres acryliques d'un second polymére acrylique présentant:
- une masse moléculaire allant de 3000 à 10 000;
- un indice d'hydroxyle allant de 40 à 120; et
- une température de transition vitreuse allant de -10 °C à 70 °C, qui a été fabriqué à partir de
$b_1$) 0 à 30% en poids d'esters acryliques;
$b_2$) 70 à 98% en poids d'esters méthacryliques, les composants $b_1$ et $b_2$ incluant respectivement des acrylates d'hydroxyalkyle et des méthacrylates d'hydroxyalkyle dans une fraction telle que l'indice d'hydroxyle allant de 40 à 120 soit atteint,
$b_3$) 0 à 30% en poids de comonomères portant des groupes aromatiques; et
$a_4$) 0 à 3% en poids d'acides à insaturation $\alpha.\beta$-éthylénique, la somme des composants $b_1$ à $b_4$ s'élevant à 100%, et

C) un polyisocyanate aliphatique ou cycloaliphatique ou un mélange de tels polyisocyanates en une quantité telle qu'à un groupe hydroxyle des constituants A) et B), il revienne 0,8 à 1,3 groupe isocyanate.

2. Article portant un revêtement à plusieurs couches, fabriqué par le procédé selon la revendication 1.